# EUROPÄISCHE PATENTSCHRIFT

(11) **EP 1 852 663 B1**
(45) Veröffentlichungstag und Bekanntmachung des Hinweises auf die Patenterteilung: **09.03.2011**
(21) Anmeldenummer: 06009218.6
(22) Anmeldetag: 03.05.2006
(51) Int. Cl.: F24J 2/46, F24J 2/20

(54) **Solarabsorbereinheit**
Solar collector unit
Unité de collecteur solaire

(43) Veröffentlichungstag der Anmeldung: 07.11.2007
(73) Patentinhaber: Global Plastic, S.A., 31500 Tudela (ES)
(72) Erfinder:
(74) Vertreter: Rohmann, Michael

(56) Entgegenhaltungen:
- EP-A- 1 398 582
- DE-A1- 3 013 199
- DE-A1- 3 022 666
- DE-U1- 29 811 015
- JP-A- 51 002 047
- JP-A- 56 108 054
- US-A- 4 296 740

## Beschreibung

Die Erfindung betrifft eine Solarabsorbereinheit mit einer oberseitigen Absorberfläche und einer unterseitigen Absorberfläche, wobei zwischen den Absorberflächen ein Durchströmungszwischenraum für ein Wärmeübertragungsmedium vorgesehen ist und wobei eine Mehrzahl von Anschlussstutzen an den Seiten der Absorbereinheit angeordnet ist. In der Regel wird eine Mehrzahl solcher Solarabsorbereinheiten zu einem Solarkollektorfeld zusammengeschaltet. Die Solarabsorbereinheiten werden hierzu über ihre Anschlussstutzen zu den Solarkollektorfeldern miteinander verbunden. Dabei können die Solarabsorbereinheiten parallel zueinander geschaltet werden oder aber in Reihe geschaltet werden. Bei einer Reihenschaltung durchströmt das Wärmeübertragungsmedium die zusammengeschalteten Solarabsorbereinheiten nacheinander. Bei dem Wärmeübertragungsmedium handelt es sich normalerweise um Wasser, das die flächigen Solarabsorbereinheiten in der Regel vollflächig durchströmt.

Aus der Praxis sind die vorstehend beschriebenen Solarabsorbereinheiten in verschiedenen Ausführungsformen bekannt. Jede Solarabsorbereinheit weist normalerweise zwei Anschlussstutzen auf, die jeweils für den Vorlauf bzw. für den Rücklauf des Wärmeübertragungsmediums vorgesehen sind. Die beiden Anschlussstutzen sind dabei entweder an einer Seite der Solarabsorbereinheit angeordnet oder an diagonal gegenüberliegenden Ecken der Solarabsorbereinheit. Diesen Solarabsorbereinheiten sind im Hinblick auf ihre Zusammenschaltung zu Kollektorfeldern Grenzen gesetzt. Es sind nur bestimmte Anordnungen bzw. Schaltungen von Solarabsorbereinheiten möglich oder es müssen nachteilhaft lange Leitungswege zwischen den Solarabsorbereinheiten vorgesehen werden. Im Ergebnis lässt die Effektivität der Wärmeübertragung in Solarkollektorfeldern mit den bekannten Solarabsorbereinheiten zu wünschen übrig. Bei den bekannten Solarabsorbereinheiten wird eine Entlüftungseinrichtung häufig in einer Rücklaufleitung zu der Solarabsorbereinheit vorgesehen. Die Funktionssicherheit der Entlüftung lässt hier manchmal zu wünschen übrig.

Demgegenüber liegt der Erfindung das technische Problem zugrunde, eine Solarabsorbereinheit anzugeben, die sich im Hinblick auf ihre Schaltungsmöglichkeiten durch Flexibilität und Variabilität auszeichnet und die nichtsdestoweniger eine funktionssichere und effektive Wärmeübertragung gewährleistet.

Eine Solarabsorbereinheit der eingangs genannten Art, bei der zumindest vier Anschlussstutzen vorgesehen sind, die über zumindest drei Seiten der Absorbereinheit verteilt angeordnet sind, ist beispielsweise aus der US-4,296,740 bekannt. Anschlussstutzen meint dabei einen Stutzen, über den eine weitere Solarabsorbereinheit eines Solarkollektorfeldes angeschlossen werden kann. Es muss aber keinesfalls zwingend über jeden der Anschlussstutzen einer erfindungsgemäßen Solarabsorbereinheit eine Verbindung erfolgen bzw. insbesondere eine Verbindung zu einer weiteren Solarabsorbereinheit erfolgen. Das wird weiter unten noch erläutert. Die erfindungsgemäße Solarabsorbereinheit wird zweckmäßigerweise vollflächig von dem Wärmeübertragungsmedium durchströmt. Bei dem Wärmeübertragungsmedium handelt es sich zweckmäßigerweise um ein fluides Medium, vorzugsweise um Wasser oder um ein Wasser-Glykolgemisch. Als Wärmeübertragungsmedium kann aber auch Luft eingesetzt werden.

Es liegt im Rahmen der Erfindung, dass eine Solarabsorbereinheit, abgesehen von offenen Anschlussstutzen, an den Seiten geschlossen ausgebildet ist. Dass ein Anschlussstutzen an einer Seite angeordnet ist, meint im Rahmen der Erfindung insbesondere, dass der Anschlussstutzen bzw. die Längsachse des Anschlussstutzens quer zu dieser Seite angeordnet ist, vorzugsweise senkrecht bzw. im Wesentlichen senkrecht zu dieser Seite angeordnet ist. Es liegt im Übrigen weiterhin im Rahmen der Erfindung, dass der Abstand zwischen der oberseitigen Absorberfläche und der unterseitigen Absorberfläche gering ist im Vergleich zur Größe dieser Absorberflächen.

Eine besonders bevorzugte Ausführungsform der Erfindung ist dadurch gekennzeichnet, dass die zumindest vier Anschlussstutzen auf vier Seiten der Absorbereinheit, insbesondere auf vier Rechteckseiten einer rechteckigen Absorbereinheit verteilt angeordnet sind. Vorzugsweise ist die Absorbereinheit nämlich rechteckig ausgebildet, und zwar mit rechteckiger oberseitiger Absorberfläche und rechteckiger unterseitiger Absorberfläche. Zweckmäßigerweise sind die zumindest vier Anschlussstutzen an den Ecken bzw. im Bereich der Ecken der rechteckigen Absorbereinheit angeordnet.

Eine sehr bevorzugte Ausführungsform der Erfindung zeichnet sich dadurch aus, dass an jeder von vier Seiten der Absorbereinheit, insbesondere an jeder der vier Rechteckseiten einer rechteckigen Absorbereinheit jeweils zwei Anschlussstutzen angeordnet sind. Besonders bevorzugt ist im Rahmen der Erfindung, dass die zumindest acht Anschlussstutzen an den Ecken bzw. im Bereich der Ecken der Absorbereinheit, insbesondere an den vier Ecken bzw. im Bereich der vier Ecken der rechteckigen Absorbereinheit angeordnet sind. Nach sehr bevorzugter Ausführungsform der Erfindung sind an jeder Ecke der Absorbereinheit zumindest zwei Anschlussstutzen vorgesehen, wobei die an einer Ecke vorgesehenen beiden Anschlussstutzen vorzugsweise quer zueinander angeordnet sind. Quer zueinander angeordnete Anschlussstutzen meint im Rahmen der Erfindung insbesondere, dass die Längsachsen dieser Anschlussstutzen quer zueinander angeordnet sind und vorzugsweise senkrecht bzw. im Wesentlichen senkrecht zueinander angeordnet sind. Wenn an einer Ecke der Absorbereinheit zwei Anschlussstutzen vorgesehen sind, ist bevorzugt jeder dieser beiden Anschlussstutzen jeweils an einer der an dieser Ecke aufeinander zulaufenden Seiten angeordnet.

Gemäß der Erfindung ist bei einer jungfräulichen, d. h. bei einer noch nicht verbundenen angeschlossenen Solarabsorbereinheit zumindest ein Teil der Anschlussstutzen verschlossen. Die anfangs verschlossenen Anschlussstutzen werden dadurch erhalten, dass die erfindungsgemäße Solarabsorbereinheit als Kunststoffteil durch Blasformen erzeugt wird. Aufgrund dieses Herstellungsvorganges kann eine jungfräuliche Solarabsorbereinheit erzeugt werden, bei der einige Anschlussstutzen, beispielsweise zwei Anschlussstutzen, offen sind und der Rest der Anschlussstutzen verschlossen ist. Bei Bedarf können anfangs verschlossene Anschlussstutzen durch Abtrennen ihres Stirnendes bzw. ihrer Stirnwand geöffnet werden. Zweckmäßigerweise können nach dem Anschluss bzw. beim Anschluss der Solarabsorbereinheit nicht benötigte Anschlussstutzen verschlossen werden bzw. auch wieder verschlossen werden. Der Verschluss dieser nicht benötigten Anschlussstutzen erfolgt vorzugsweise mit Hilfe von Blindstopfen. Der Verschluss eines nicht benötigten Anschlussstutzens kann aber auch unter Integration einer Funktionseinrichtung erfolgen, was weiter unten noch erläutert wird.

Es liegt im Rahmen der Erfindung, dass zumindest ein Vorlauf für das Wärmeübertragungsmedium und zumindest ein Rücklauf für das Wärmeübertragungsmedium an die Anschlussstutzen angeschlossen sind. Dabei ist zweckmäßigerweise an einen Anschlussstutzen der erfindungsgemäßen Solarabsorbereinheit eine Vorlaufleitung für das Wärmeübertragungsmedium und an einen zweiten Anschlussstutzen dieser Solarabsorbereinheit eine Rücklaufleitung für das Wärmeübertragungsmedium angeschlossen. Die übrigen Anschlussstutzen können dann verschlossen bleiben bzw. verschlossen werden. Grundsätzlich liegt es aber auch im Rahmen der Erfindung, dass beispielsweise an zwei an einer Seite der Solarabsorbereinheit angeordnete Anschlussstutzen jeweils eine Vorlaufleitung angeschlossen ist, und dass an zwei an einer gegenüberliegenden Seite der Solarabsorbereinheit angeordnete Anschlussstutzen jeweils eine Rücklaufleitung angeschlossen ist. Auch in diesem Fall werden die übrigen Anschlussstutzen zweckmäßigerweise verschlossen, beispielsweise mit den oben bereits erwähnten Blindstopfen.

Wie oben bereits angedeutet, können die nicht benötigten Anschlussstutzen aber auch mit einem Verschluss versehen werden, in den eine Funktionseinrichtung integriert ist. So kann nach einer bevorzugten Ausführungsform an zumindest einen Anschlussstutzen der Solarabsorbereinheit eine Entlüftungseinrichtung angeschlossen werden. Die Entlüftung über eine solche an einen Anschlussstutzen angeschlossene Entlüftungseinrichtung ist besonders funktionssicher möglich. Bei dieser Ausführungsform entspricht die Entlüftungseinrichtung also der oben genannten Funktionseinrichtung.

Gemäß einer bevorzugten Ausführungsvariante der Erfindung ist an zumindest einen Anschlussstutzen ein Temperaturfühler als Funktionseinrichtung angeschlossen. Bei den aus dem Stand der Technik bekannten Solarabsorbereinheiten ist ein Temperaturfühler häufig in der Rücklaufleitung oder in der Vorlaufleitung vorgesehen. Die erfindungsgemäße Anordnung eines Temperaturfühlers an einem Anschlussstutzen der Solarabsorbereinheit hat sich besonders bewährt. Die nicht benötigten Anschlussstutzen der erfindungsgemäßen Solarabsorbereinheit können also in vorteilhafter Weise für einen Verschluss mit Funktionseinrichtungen genutzt werden.

Der Erfindung liegt die Erkenntnis zugrunde, dass sich eine erfindungsgemäße Solarabsorbereinheit im Hinblick auf die Möglichkeit ihrer Zusammenschaltung zu Kollektorfeldern durch eine hohe Flexibilität und Variabilität auszeichnet. Grundsätzlich sind mit den erfindungsgemäßen Solarabsorbereinheiten alle denkbaren Kollektorfeldschaltungen möglich. Diese erfindungsgemäße Möglichkeit ergibt sich aufgrund der Mehrzahl von Anschlussstutzen bzw. aufgrund der Anordnung dieser Mehrzahl von Anschlussstutzen. Die erfindungsgemäßen Solarabsorbereinheiten können problemlos in eine Reihenschaltung integriert werden. Bei einer solchen Reihenschaltung werden die Solarabsorbereinheiten hintereinander geschaltet und nacheinander von dem Wärmeübertragungsmedium durchströmt. Die erfindungsgemäßen Solarabsorbereinheiten können aber auch problemlos in einer Mehrzahl von möglichen Anordnungen parallel zueinander geschaltet werden. Mit den erfindungsgemäßen Solarabsorbereinheiten können also auf einfache und zwanglose Weise verschiedene Reihenschaltungen oder Parallelschaltungen realisiert werden und die Solarabsorbereinheiten können dabei problemlos, insbesondere vertikal oder horizontal, angeordnet werden. Der Erfindung liegt weiterhin die Erkenntnis zugrunde, dass nicht benötigte Anschlussstutzen der erfindungsgemäßen Solarabsorbereinheit auf einfache Weise dicht verschlossen werden können. Von besonderer Bedeutung sind dabei die Ausführungsformen, bei denen ein Verschluss der nicht benötigten Anschlussstutzen mit integrierter Funktionseinrichtung (insbesondere Entlüftungseinrichtung oder Temperaturfühler) erfolgt. An den Anschlussstutzen können die Funktionseinrichtungen besonders effektiv und funktionssicher eingesetzt werden. Eine erfindungsgemäße Solarabsorbereinheit lässt sich auf relativ einfache und kostengünstige Weise als Kunststoffteil im Zuge eines Blasformverfahrens herstellen. Bei der Herstellung einer erfindungsgemäßen Solarabsorbereinheit im Blasformverfahren ist zumindest ein Teil der Anschlussstutzen der jungfräulichen Absorbereinheit verschlossen ausgebildet und bei Bedarf können anfangs verschlossene Anschlussstutzen auf einfache Weise geöffnet werden. Die erfindungsgemäßen Solarabsorbereinheiten eignen sich insbesondere zur Beheizung von Schwimmbädern bzw. Freibädern und dergleichen.

Nachfolgend wird die Erfindung anhand einer lediglich ein Ausführungsbeispiel darstellenden Zeichnung näher erläutert. Es zeigen in schematischer Darstellung:
- Fig. 1: eine Draufsicht auf eine erfindungsgemäße Solarabsorbereinheit,
- Fig. 2: den vergrößerten Ausschnitt A aus Fig. 1 und
- Fig. 3: einen vergrößerten Ausschnitt eines Schnittes durch den Gegenstand nach Fig. 1.

Die Figuren zeigen eine erfindungsgemäße Solarabsorbereinheit mit einer oberseitigen Absorberfläche 1 und einer unterseitigen Absorberfläche 2. Vorzugsweise und im Ausführungsbeispiel ist die erfindungsgemäße Solarabsorbereinheit in der Draufsicht rechteckig ausgebildet. Die oberseitige Absorberfläche 1 und die unterseitige Absorberfläche 2 werden an den Seiten durch Seitenwände 3 miteinander verbunden. Zwischen den Absorberflächen 1, 2 ist ein Durchströmungszwischenraum 4 für ein Wärmeübertragungsmedium vorgesehen. Die Absorberflächen 1, 2 sind im Übrigen vorzugsweise schwarz eingefärbt.

Im Ausführungsbeispiel sind insgesamt acht Anschlussstutzen 5, 6 vorgesehen, von denen jeweils zwei in den Ecken bzw. im Bereich der Ecken der Solarabsorbereinheit angeordnet sind. Diese beiden an einer Ecke angeordneten Anschlussstutzen 5, 6 sind jeweils senkrecht zueinander orientiert.

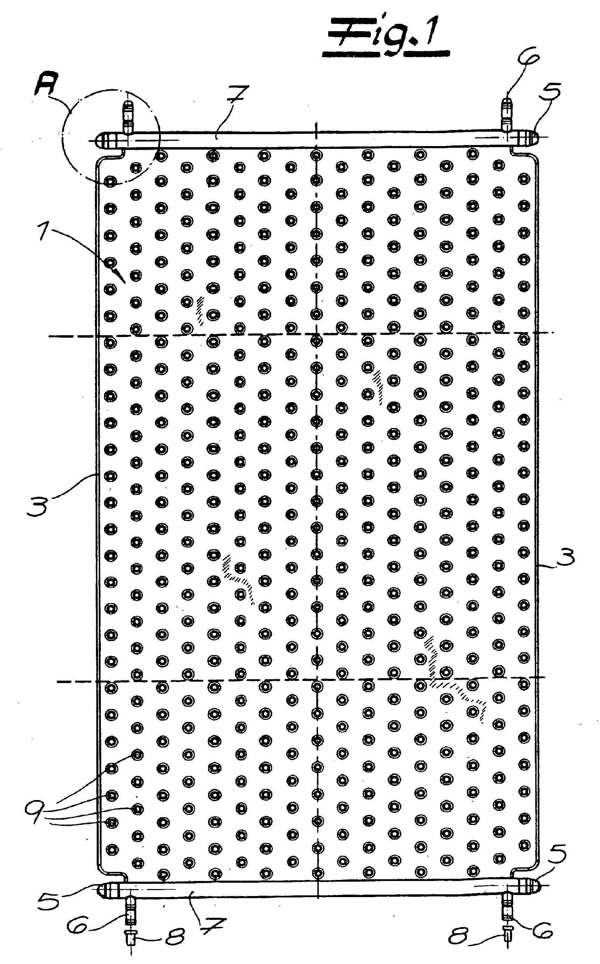

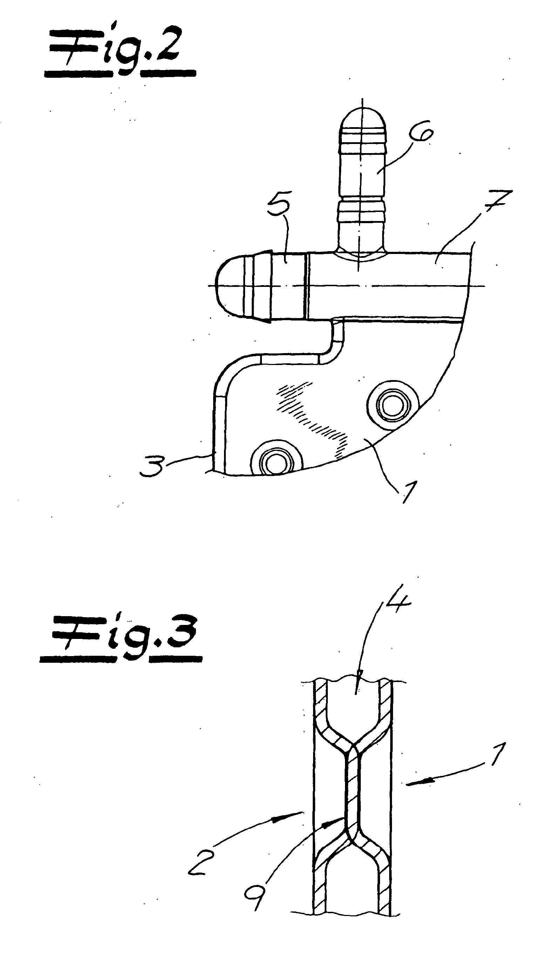

Im Ausführungsbeispiel (Fig. 1 und 2) ist an den beiden Schmalseiten der rechteckigen Solarabsorbereinheit jeweils ein Sammelrohr 7 für das Wärmeübertragungsmedium vorgesehen. An den Enden der Sammelrohre 7 ist jeweils ein Anschlussstutzen 5 vorhanden, der gleichsam die Verlängerung des jeweiligen Sammelrohres 7 bildet. Weiterhin ist im Bereich der Enden der Sammelrohre 7 jeweils ein weiterer Anschlussstutzen 6 angeordnet, der senkrecht zu dem erstgenannten Anschlussstutzen 5 orientiert ist.

Im Ausführungsbeispiel (siehe insbesondere Fig. 2) haben die die Verlängerung des Sammelrohres 7 bildenden Anschlussstutzen 5 einen größeren Durchmesser als die Anschlussstutzen 6. An zumindest einen Anschlussstutzen 5, 6 kann eine in den Figuren nicht dargestellte Vorlaufleitung für das Wärmeübertragungsmedium angeschlossen werden und an zumindest einen weiteren Anschlussstutzen 5, 6 kann eine in den Figuren ebenfalls nicht dargestellte Rücklaufleitung für das Wärmeübertragungsmedium angeschlossen werden. Nicht benötigte Anschlussstutzen 5, 6 können insbesondere durch einen Blindstopfen 8 verschlossen werden.

Vorzugsweise und im Ausführungsbeispiel ist zwischen der oberseitigen Absorberfläche 1 und der unterseitigen Absorberfläche 2 eine Mehrzahl von Verbindungsstellen 9 vorgesehen, wobei sich die Verbindungsstellen 9 vorzugsweise gleichmäßig über die Absorberflächen 1, 2 verteilen. Im Bereich der Verbindungsstelle 9 sind oberseitige Absorberfläche 1 und unterseitige Absorberfläche 2 zur Verwirklichung der Verbindung zum Inneren des Durchströmungszwischenraumes 4 hin gewölbt. Die Verbindungsstellen 9 bilden somit gleichsam Strömungsschikanen in dem Durchströmungszwischenraum 4 zwischen den Absorberflächen 1, 2. Ansonsten wird der Durchströmungszwischenraum 4 aber vorzugsweise vollflächig von dem Wärmeübertragungsmedium durchströmt.

Die erfindungsgemäße Solarabsorbereinheit besteht aus Kunststoff und wird im Zuge eines Blasformvorganges hergestellt. Aufgrund dieser Herstellung sind im Ausführungsbeispiel (Fig. 1) anfangs lediglich zwei Anschlussstutzen 6 offen ausgebildet und der Rest der Anschlussstutzen 5, 6 ist verschlossen. Bei Bedarf können diese verschlossenen Anschlussstutzen 5, 6 auf einfache Weise durch Abtrennen ihres Stirnendes geöffnet werden.

## Patentansprüche

1. Solarabsorbereinheit mit einer oberseitigen Absorberfläche (1) und einer unterseitigen Absorberfläche (2), wobei zwischen den Absorberflächen (1, 2) ein Durchströmungszwischenraum (4) für ein Wärmeübertragungsmedium vorgesehen ist, wobei zumindest vier Anschlussstutzen (5, 6) vorgesehen sind, die über zumindest drei Seiten der Absorbereinheit verteilt angeordnet sind,
darduch **gekennzeichnet**, dass
die Absorbereinheit als Kunststoffteil durch Blasformen erzeugt ist, wobei aufgrund dieses Herstellungsvorganges eine jungfräuliche Absorbereinheit vorliegt, bei der zumindest ein Teil der Anschlussstutzen (5, 6) verschlossen ist und wobei diese anfangs verschlossenen Anschlussstutzen (5, 6) bei Bedarf durch Abtrennen ihres Stirnendes oder ihrer Stirnwand geöffnet werden können.

2. Solarabsorbereinheit nach Anspruch 1, wobei die zumindest vier Anschlussstutzen (5, 6) auf vier Seiten der Absorbereinheit, insbesondere auf vier Rechteckseiten einer rechteckigen Absorbereinheit, verteilt angeordnet sind.

3. Solarabsorbereinheit nach einem der Ansprüche 1 oder 2, wobei an jeder von vier Seiten der Absorbereinheit, insbesondere an jeder der vier Rechteckseiten einer rechteckigen Absorbereinheit, jeweils zwei Anschlussstutzen (5, 6) angeordnet sind.

4. Solarabsorbereinheit nach Anspruch 3, wobei die Anschlussstutzen (5, 6) an den Ecken der Absorbereinheit, insbesondere an den vier Ecken der rechteckigen Absorbereinheit, angeordnet sind.

5. Solarabsorbereinheit nach einem der Ansprüche 1 bis 4, wobei an jeder Ecke der Absorbereinheit zwei Anschlussstutzen (5, 6) vorgesehen sind, wobei die an einer Ecke vorgesehenen beiden Anschlussstutzen (5, 6) vorzugsweise quer zueinander angeordnet sind.

6. Solarabsorbereinheit nach einem der Ansprüche 1 bis 5, wobei zumindest ein Vorlauf und zumindest ein Rücklauf für das Wärmeübertragungsmedium an die Anschlussstutzen (5, 6) angeschlossen sind.

7. Solarabsorbereinheit nach einem der Ansprüche 1 bis 6, wobei an zumindest einen Anschlussstutzen (5, 6) eine Entlüftungseinrichtung angeschlossen ist.

8. Solarabsorbereinheit nach einem der Ansprüche 1 bis 7, wobei an zumindest einen Anschlussstutzen (5, 6) ein Temperaturfühler angeschlossen ist.

## Claims

1. A solar absorber unit with an upper absorber surface (1) and a lower absorber surface (2), wherein
between the absorber surfaces (1, 2) an intermediate space (4) is provided for the through-flow of a heat transfer medium, wherein
at least four pipe connections (5, 6) are provided, which are arranged distributed over at least three sides of the absorber unit,
**characterised in that** the absorber unit is generated as a plastic part by means of blow moulding, wherein
as a result of this manufacturing process an unused absorber unit exists in which at least some of the pipe connections (5, 6) are closed, and wherein
these initially closed pipe connections (5, 6) can be opened as required by detaching their front end or their front wall.

2. The solar absorber unit in accordance with Claim 1, wherein
the at least four pipe connections (5, 6) are arranged distributed on four sides of the absorber unit, in particular on the four rectangular sides of a rectangular absorber unit.

3. The solar absorber unit in accordance with one of the Claims 1 or 2, wherein
on each of four sides of the absorber unit, in particular on each of the four rectangular sides of a rectangular absorber unit, two pipe connections (5, 6) are arranged in each case.

4. The solar absorber unit in accordance with Claim 3, wherein
the pipe connections (5, 6) are arranged at the corners of the absorber unit, in particular at the four corners of the rectangular absorber unit.

5. The solar absorber unit in accordance with one of the Claims 1 to 4, wherein
two pipe connections (5, 6) are provided at each corner of the absorber unit, wherein
the two pipe connections (5, 6) provided at a corner are preferably arranged transverse to one another.

6. The solar absorber unit in accordance with one of the Claims 1 to 5, wherein
at least one feed line and at least one return line for the heat transfer medium are connected to the pipe connections (5, 6).

7. The solar absorber unit in accordance with one of the Claims 1 to 6, wherein
a venting device is connected to at least one pipe connection (5, 6).

8. The solar absorber unit in accordance with one of the Claims 1 to 7, wherein
a temperature sensor is connected to at least one pipe connection (5, 6).

## Revendications

1. Unité d'absorption solaire comprenant une surface absorbante (1) côté supérieur et une surface absorbante (2) côté inférieur, un espace intermédiaire d'écoulement (4) étant prévu entre les surfaces absorbantes (1, 2) pour un fluide de transmission de chaleur, au moins quatre tubulures de raccordement (5, 6) étant prévues, lesquelles sont disposées réparties sur au moins trois côtés de l'unité absorbante,
**caractérisée en ce que**
l'unité absorbante est générée sous forme de partie plastique par soufflage, une unité absorbante vierge étant présente du fait de ce processus de fabrication, unité sur laquelle au moins une partie des tubulures de raccordement (5, 6) est fermée et ces tubulures de raccordement (5, 6) fermées au début pouvant être ouvertes éventuellement par séparation de leur extrémité avant ou de leur paroi avant.

2. Unité d'absorption solaire selon la revendication 1, les au moins quatre tubulures de raccordement (5, 6) étant disposées sur quatre côtés de l'unité absorbante, en particulier sur quatre côtés de rectangle d'une unité absorbante rectangulaire.

3. Unité d'absorption solaire selon l'une quelconque des revendications 1 ou 2, deux tubulures de raccordement (5, 6) étant disposées à chaque fois sur chacun des quatre côtés de l'unité absorbante, en particulier sur chacun des quatre côtés de rectangle d'une unité absorbante rectangulaire.

4. Unité d'absorption solaire selon la revendication 3, les tubulures de raccordement (5, 6) étant disposées sur les angles de l'unité absorbante, en particulier sur les quatre angles de l'unité absorbante rectangulaire.

5. Unité d'absorption solaire selon l'une quelconque des revendications 1 à 4, deux tubulures de raccordement (5, 6) étant prévues sur chaque angle de l'unité absorbante, les deux tubulures de raccordement (5, 6) prévues sur un angle étant disposées de préférence transversalement l'une par rapport à l'autre.

6. Unité d'absorption solaire selon l'une quelconque des revendications 1 à 5, au moins un aller et au moins un retour pour le fluide de transmission de chaleur étant raccordé aux tubulures de raccordement (5, 6).

7. Unité d'absorption solaire selon l'une quelconque des revendications 1 à 6, un dispositif de purge étant raccordé à au moins une tubulure de raccordement (5, 6).

8. Unité d'absorption solaire selon l'une quelconque des revendications 1 à 7, une sonde de température étant raccordée à au moins une tubulure de raccordement (5, 6).
